# EUROPEAN PATENT APPLICATION

(11) **EP 2 355 563 A1**
(43) Date of publication of application: **10.08.2011**
(21) Application number: 10159077.6
(22) Date of filing: 05.04.2010
(51) Int. Cl.: H04W 8/00, H04M 1/725

(54) **Method for automatic pairing to a wireless network**

(30) Priority: 10.02.2010 US 703345
(71) Applicant: Cheng Uei Precision Industry Co., Ltd., Tu Cheng City, Taipei (TW); Solteras, Inc., City Of Industry, CA 91748 (US)
(72) Inventor: Ma, Julia, Wset Corvina, CA91791 (US); Jenkins, Daniel C., Pomona, CA91767 (US); Jackson, Tim, Yorba Linda, CA92887 (US); Zhu, Xi, Alhambra, CA91801 (US); Poole, Gary W., Arcadia, CA91006 (US)
(74) Representative: Gee, Steven William

(57) **Abstract**

A software based method for establishing wireless connection between wireless devices and a host device automatically, through pairing and connection operations, includes the host device automatically scanning for detecting broadcast signals radiated by the wireless devices and accepting only the device types from a preauthorized list. The signal strengths for the accepted device types are measured automatically, and only those that are higher than a predefined level are saved. The device with the highest signal strength is identified automatically as a qualified device, for pairing. A passkey is automatically assigned to the qualified device, along with a pairing request and the pairing operation is established. Subsequently, the connection operation is automatically established between the qualified device after pairing and the host device. This method continues automatically, with the next qualified device until there is no saved information and with more scans until no broadcast signal is detected.

## Description

### BACKGROUND OF THE INVENTION

### FIELD OF THE INVENTION:

This invention relates generally to the connection of a wireless communications device or network to another wireless communications device or network, and more particularly to establishing such connection automatically and without the need for user interaction.

### DESCRIPTION OF RELATED ART:

A variety of wireless devices exists, that allows for communications with other wireless devices in order to exchange data. Typical wireless communications devices and networks employ communications protocols that specify how compatible devices will connect and communicate amongst themselves. Many of such protocols, such as Bluetooth, WiFi, WiMax, ZigBee, etc., are standardized by industry groups such that a broad range of compatible products can be developed. Most of these protocols include strict procedures for adding a new device to an existing network and/or for establishing a connection between two or more devices. A primary goal of such procedures is to insure the integrity of the system and insure that accidental and/or potentially hazardous connections are prevented. As such, these procedures typically require that a user of at least one of the devices involved in the process initiates the procedure and/or inputs an identification code that may be required for security purposes.

In the past, many of these wireless devices and networks experienced limited deployment and/or operation by a narrow, technically skilled user base. With continued improvements in cost, device size, performance, system coverage and availability, wireless devices and systems have become commonplace in the general public. As such, the user base is now comprised of a wide range of individuals, many of them having limited or no technical aptitude. As such, many of the current state of the art procedures for adding a new device to an existing network and/or for establishing a connection between two or more devices are difficult and confusing to the present user base.

Therefore a need exists for a simplified method of automatically connecting wireless devices or networks without compromising the integrity of the connection or the data contained therein.

In the typical systems available, wireless devices may be connected to a network and/or another device only when the user initiates the connection process. The following are a few examples of the procedures required to establish a connection on representative wireless protocols:
i) 802.11 (WiFi): For this standard, the connection starts with the user initiating a search in a host device, for the available networks. Once the host device identifies the available networks, the user must then select a network or device with which a connection will be attempted. If the network is unsecured, then the host device will inform the user of the unsecured nature of the network with the associated risks of connecting to an unsecured network and require that the user acknowledge the connection. If the user acknowledges the connection, then the host device will attempt to connect. If the network is secured, then the network will request a security code, such as a 10-character code, that grants access to the network. The user must then input the security code so that the host device will send the code to the network or the other wireless device. If the code is correct, the network and the host device will exchange information in order to establish the connection. Many host devices save the security code such that it is automatically provided on subsequent attempts to connect to that given network or wireless device.
ii) Bluetooth: For this standard, there are two steps required to establish a connection. The first step involves pairing one wireless device to another host device. In order to be paired, the wireless device must first be set to a discoverable mode, meaning that the user configures the wireless device such that it broadcasts information about itself. During the discovery process, the discoverable devices typically broadcast their 'device type' such as mouse, hands-free, PC, mobile phone, etc., and their Bluetooth device name such as '1234 headset' or 'notebook PC'. The host device will eventually provide a list of discoverable devices found within an effective range. The user must then select a device from the list and initiate the pairing process. As the pairing process continues, one of the devices will request a passkey or a personal identification number (PIN). For many consumer devices, a PIN code is pre-loaded into the devices and identified in the product documentation. A common pre-coded PIN for peripheral devices of Bluetooth protocol is '0000'. Once the PIN code is entered by the user, the code is sent to the wireless device to which the pairing is being established. If the PIN is correct, the pairing information is stored in each wireless device such that future connections can be achieved without re-entering the PIN code. After a successful pairing, the two devices can now be connected. A connection may be established automatically if both devices have been previously paired. Bluetooth 2.1 has an optional 'touch-to-pair' feature based on near-field-communication (NFC) interface. Pairing is achieved by bringing two devices into very close range, around 10 cm/4 in, such that the passkey and the configuration data are exchanged via the NFC interface. However, this method requires that both devices include the necessary NFC interface and therefore excludes 'touch-to-pair' from use on legacy devices.

The patent US7,216,231 provides a method of establishing a secure communications link between two communications devices by using two different protocols. The first protocol is used to exchange a first PIN. The first PIN is then used to generate a second PIN that is used for the second communications protocol. For example, a first PIN is generated and sent across a custom ISM band radio link. That first PIN is then converted into a second PIN that is used as the security code for a WiFi connection. This method is much more complicated than a simple proximity-based exchange. This method uses two communications links but does not pass the actual PIN or WEP key over the first link. Instead, it uses the information passed over the first link to generate a PIN for the second link.

The patent US 6,772,331 provides a method and a system for enabling wireless devices to be paired or permanently associated by a user or a network administrator. The method and the system utilize the well known public key cryptography and the machine unique identifiers to establish a secured channel and associate the devices with each other. This is extremely useful for associating a wireless headset with a telephone or associating a wireless mouse with a computer. This method and system appears to utilize a stored list of authorization codes. A device that wants to connect will transmit its authorization code. The receiving device compares it to the list.

The patent US 7,424,267 describes a method, apparatus, and system for automatically sharing data resources between Bluetooth devices. A Bluetooth device is paired with a 'trusted' Bluetooth device. When paired devices are found, the Bluetooth device automatically allows the other device to present a virtual representation of data that is shared. The shared data can be selectively downloaded for use by the other device as long as the devices are in proximity. In an alternate embodiment, the devices may share pairing information with a network, so that the same shared resource can be made available at a greater number of access points but specifically only for one paired and trusted device. This prior art appears to relate to the way data is exchanged between multiple Bluetooth devices, as opposed to how pairing and connection are achieved.

The patent US 6978119 teaches a fast connection establishment method for establishing a wireless connection between two Bluetooth devices. A Bluetooth module, a Bluetooth address memory, a CPU and a connection interface for outside the device are installed in each Bluetooth device. The method first connects the three signal contacts of a Bluetooth device to the three signal contacts of another Bluetooth device to interchange the Bluetooth addresses with each other. Then the Bluetooth address memory of the Bluetooth device is used to store the Bluetooth address of the opposite Bluetooth device. After this, the Bluetooth address is sent out after the power source of the Bluetooth device is on. A Bluetooth connection procedure is started if the Bluetooth address of the opposite device is received in a specific time. Thereby, a wireless transmission can be established between two Bluetooth devices. This method requires physical and electrical contact between the units such that information is exchanged via the contact.

The US publication 20040203381 teaches a method and apparatus for ad hoc addressing and group creation between wireless devices. A wireless communications device that has a sensor for sensing the contact or proximity of another wireless communications device forms a communications link with the second wireless communications device. The contact or close proximity of the two devices operates to identify the two devices for which a link will be established. This provides easy addressing of the desired device and security, as the user must initiate physical contact or bring the device in very close proximity to the other device. Once the link is established data can be transferred between the two devices. In the simplest embodiment, the two devices are touched together and personal contact information is automatically exchanged. If a plurality of devices are in close proximity or touched together, an ad hoc network can be formed between all the devices. The network would be established for only as long as needed. A group list, called an electronic contact group is formed for the immediate establishment of the network or saved for later use. This method and the apparatus use proximity sensing in order to establish a wireless connection. The connections can form an informal 'mesh' network. While this concept uses proximity, there appears to be no automatic setting of a PIN code and the connections are not limited by the 'type' of device that is detected.

All of the above-described prior art references are hereby incorporated herein by reference in their entirety.

The prior art teaches techniques for establishing connection between wireless devices or networks/systems, with certain steps of required user interaction or without proper limitations related to the device types and the PIN codes, for specific applications. The level of user interaction generally required in the prior art is acceptable to users that have experience with such procedures and/or aptitude to learn and execute such procedures. However for a significant segment of the user community, such interaction can be difficult and/or intimidating. In addition, legislation in many states and countries now requires the use of hands-free products when utilizing cellular telephones in moving automobiles. As such, a simplified procedure for pairing and connecting wireless devices will provide significant benefit to all users. The prior art does not teach techniques for establishing the wireless connection without user interaction being required along with limitations in connectivity based on device types and PIN codes that are also desirable for specific applications, particularly for security reasons.

The present invention fulfills these needs and provides further related advantages as described in the following summary.

### SUMMARY OF THE INVENTION

The present invention teaches certain benefits in construction and use which give rise to the objectives described below.

The present invention provides a method of pairing and connection of one or more wireless devices for wireless communication with a wireless host device. The method deploys software for a pairing operation and a connection operation. For initiating the pairing operation, the host device automatically scans for broadcast signals that are being radiated by the wireless devices. The broadcast signals include information on the type(s) of the device(s). The software accepts only the device types from a preauthorized list and automatically forms a first set with the information on the device types. The signal strengths for the broadcast signals are measured automatically for the devices in the first set, and only those devices having the signal strengths higher than a predefined level are saved in a second set. The signal strengths of the wireless devices can be increased by enhancing their physical proximity with the host device. When multiple signal strengths are available in the second set for multiple devices, the one with the highest signal strength is identified automatically as a qualified device for pairing. Otherwise, when there is only one device in the second set with the signal strength higher than the predefined level, the same device would be identified as the qualified device for the pairing operation.

A pairing process is then initiated between the host device and the qualified device. As part of the pairing process, the host device automatically assigns a passkey to the qualified device. In some systems, the passkey may be a user-generated code that is assigned to all devices on a given network. In other systems, the passkey may be a code that is preprogrammed into the qualified device, generally during the manufacturing process for said device. In most systems, the passkey is used as a security element in the pairing operation. The pairing operation is successful when the qualified device accepts or verifies the passkey and communicates back to the host device. After the successful pairing operation, the host device may automatically establish a connection with the newly paired device.

The process of automatic pairing and/or automatic connection may continue by identifying a next qualified device from the second set, until there is no saved information remaining in the second set. The entire automatic pairing operation, starting from the scanning, may continue until there is no new broadcast signal detected and/or until a specific amount of time has elapsed.

A primary objective of the present invention is to provide a METHOD FOR AUTOMATIC PAIRING TO A WIRELESS NETWORK having advantages not taught by the prior art.

It is an object of the present invention to allow a wireless device to automatically pair and/or connect to a second wireless device without the need for the user of either wireless device to participate in the pairing and/or connection activity. Limitations in connectivity based on authorized device types and PIN codes such as passkeys are also provided, particularly for security reasons. The method is equally applicable when the wireless devices are replaced by wireless networks.

Another objective is to provide an option to the user for enabling a pairing and connection mode in the host device, for initiating the pairing operation and the connection operation. The user also has the option to disable the mode at any time. This feature would economize the power required for the pairing operation and the connection operation.

A further objective is to provide a facility in the software to maintain the pairing and connection mode active for a limited time, with automatic shut off, if there is no broadcast signal detected while scanning, and there is no saved information in the second set. This feature would also economize the power required for the pairing operation and the connection operation.

A further objective is to provide an automatic saving facility in the software, for the first set of information, which may be temporary. Similar saving facilities may also be provided for a third set of information on the established pairing operations. These saving features would be helpful to the software for retrieving information from various stages of the pairing operation, to diminish the amount of time and power required.

A further objective is to provide a requirement in the software to terminate a pairing operation and re-start the process, beginning with scan, if/when the connection to a qualified wireless device is lost during the automatic pairing process. This feature improves security by requiring that the system to go through the entire procedure of the automatic pairing operation rather than accepting partially saved information from an interrupted pairing attempt.

A further objective is to provide a feature in the software to reduce a signal sensitivity factor of a radio receiver for the host device (if available), such that the allowable distance between the host device and the wireless device(s) can be intentionally reduced, for providing a physical proximity pre-filter in qualifying for the pairing operation. The signal sensitivity factor may be reduced algorithmically through the software, to enable a firmware actuation of a digital gain control feature present within the radio receiver or to control an attenuation circuitry external to the radio receiver, as available for the host device. This feature of reducing a signal sensitivity factor helps to improve the detectivity for a device of interest, as the user can improve the detectivity simply by bringing the device of interest closer to the host device and also by maintaining a line of sight between the two devices.

A further objective is to provide a feature in the software such that the signal strength(s) is (are) measured by a circuitry disposed within the host device or outside the host device. This feature provides flexibility to adapt to the design of the host device.

A further objective is to provide a feature wherein the preauthorized list in the software includes the device type with at least one of the following commonly used profiles - advanced audio distribution profile (A2DP), audio video remote control profile (AVRCP), hands free profile (HFP), head-set profile (HSP) and phone book access profile (PBAP).

A further objective is to provide a feature in the software, where the first set accepts only audio devices, such that other kinds of wireless devices are filtered out intentionally, if so desired for an application.

A further objective is to provide a disabling feature in the software for disabling the scanning automatically after a predetermined time period, to conserve power. Alternatively, the scanning may be scheduled for periodic cycles, separated by periods of inactivity.

A further objective is to provide a feature in the software for continuing the pairing request with the passkey assignment automatically, until the pairing request is accepted by the qualified device and disabling the pairing request automatically, after a predetermined time period. This is to ensure a better connection probability with multiple attempts but for a limited time period, to optimize the power consumption by the host device.

A further objective is to provide a feature in the software wherein the passkey is a common passkey used by a plurality of the device types, as is the case often with the devices in the market. This feature makes the software more flexible in adapting to the various kinds of products in the market.

A further objective is to provide a feature in the software for accepting a received signal strength indication (RSSI) factor available in a host device, to represent the signal strength. In order to pair to a new wireless device, the user simply turns on the new wireless device and brings it into proximity with the cell phone. If the wireless device is designed to automatically enter the pairing mode when turned-on, no other user interaction is required. However, if the wireless device requires a particular sequence of key-strokes, then the user will be required to perform those key-strokes in order to set the new wireless device for the pairing operation.

Other features and advantages of the present invention will become apparent from the following more detailed description, taken in conjunction with the accompanying drawings, which illustrate, by way of example, the principles of the invention.

### BRIEF DESCRIPTION OF THE DRAWINGS

The accompanying drawings illustrate the present invention.
FIG. 1 is a flow diagram of one embodiment of a method of automatic pairing and connection operations between a host device and a wireless device. In this embodiment, the application utilizes a Bluetooth protocol, a cell phone serves as the host device, and an A2DP/AVRCP audio speaker system serves as the wireless device.
FIG. 2a is a block diagram illustrating the wireless devices and the host device used in the flow diagram of FIG. 1.
FIG. 2b is a block diagram illustrating the broadcast of device information by the Bluetooth devices of FIG. 2a. Only audio devices are shown (with dashed lines) to be selected as per an authorized list of device types and for proceeding with the pairing operation.
FIG. 2c is a block diagram illustrating the host device measuring the received signal strength indication (RSSI) factor for each of the broadcasting devices that are selected as in FIG. 2b.
FIG. 2d is a block diagram illustrating the host device initiating pairing to connect with the device that has the highest RSSI.
FIG. 3 is a block diagram illustrating the process of comparing a device's profile with a list of authorized profiles to determine if the device is an authorized type. The profiles shown in the authorized list are selected for use with a Bluetooth protocol.
FIG. 4 depicts a simplified top-level flow diagram for the algorithm at FIG. 1.

### DETAILED DESCRIPTION OF THE INVENTION

The above-described drawing figures illustrate the invention, a method for automatic pairing and connection (APC) operations. The APC operations allow a user to automatically connect two wireless devices (or networks) with minimal user interaction. The method utilizes the available features in the wireless devices, in combination, such as device information (DI), proximity information (PI), and PIN code or passkey assignment (PKA), in order to connect a wireless device to a wireless host device.

For illustration of the APC operation, the following details are presented with reference to pairing and connection operations for Bluetooth devices. It should be understood that the APC operation is applicable for other wireless protocols as well, and may be adapted to other protocols using techniques well known in the art.

The DI is an existing feature available in the wireless devices that is utilized by the APC function. In a prior art Bluetooth network, for example, the device broadcasts information about itself. This information is used by the host device in order to inform the user of Bluetooth devices available in the area and to determine which profiles each device support. In a standard Bluetooth pairing, the user interacts with the pairing activity in order to insure that only trusted pairs are established. Since some Bluetooth device types can access data from the host device, it is critical that pairing to such device be monitored by the user. However, audio devices that support only A2DP, AVRCP, HSP, HFP and PBAP are basically peripheral devices that only receive data from the host and exchange a limited set of commands. As such, the host device can be more promiscuous when pairing and connecting to such devices. The APC function accepts the device types only from an authorized list.

The PI is also an existing feature available in wireless devices, that the software relies on. In a Bluetooth network, each device broadcasts signals that include information about said device. If a host device is within a range, it will detect the broadcast signals. The Bluetooth radio typically includes a function called 'received signal strength indicator' or RSSI, which measures the strength of each broadcast signal received. As a general rule, the device that is nearest to the host will have the strongest signal and therefore the RSSI value will be the greatest. The RSSI is also greater when the wireless device is along a line of sight with the host device, without any obstacle in between. Thus, by comparing the RSSI for several devices it is possible to predict which of those devices is the closest to the host device. This prediction will however not always be accurate. For instance, the nearest device may be a headset that the user is wearing but the host device such as a cell phone, may be located on the other side of the user's body, causing attenuation of the headset signal. Another Bluetooth device may be further away but may have a clear line-of-sight to the host and therefore a greater signal. However, for the purposes of the APC function, using the greatest RSSI value is reasonable given that in most cases the user will bring a device of interest within direct proximity of the host device in order to perform the APC function. The APC function commands the host device to register all RSSIs above a certain level, for wireless devices that have device types belonging to the authorized list. If multiple devices register RSSI above the threshold, then the device with the highest RSSI becomes qualified for the pairing operation. For the APC function, optionally during scanning, proximity can also be identified by temporarily reducing the sensitivity/gain of the host device, thus limiting the range at which it is able to detect broadcast signals. Reduction of the receiver gain during the pairing and connection operations may be accomplished by the firmware actuation of digital gain control features present in most modem radio designs. In other applications, receiver gain control may be accomplished by algorithmic control of gain/attenuation circuitry external to the radio IC. By attenuating the gain sufficiently, only those devices in a very close proximity will be detected. Conceivably, the gain can be adjusted until the host can only detect devices within a very constrained radius. Note that, as with the stand-alone RSSI method, a prediction generated using this method may not always be accurate, depending on the relative signal strengths of the devices within range. However, in most cases, an attenuated receiver will detect only the single device to which the user desires to pair.

In an embodiment of the present invention, the APC function combines the available features such as the DI and the PI with the RSSI, such that the host device can determine if a device is both nearby and of suitable type for connection. In such cases it is acceptable to pair and connect automatically without requiring interaction from the user.

PKA is another feature that the APC uses. A similar feature is already available in many wireless devices such as for Bluetooth. A passkey for a Bluetooth device needs to be entered into the host during a pairing operation for Bluetooth protocol. Each Bluetooth device is given a passkey when the device is programmed by the manufacturer. The passkey can be any code, however simple audio devices are typically assigned the passkey '0000'. If a device has the greatest RSSI and adheres to the device types mentioned, the APC function will only work if the Bluetooth device uses '0000' as its passkey. The APC function utilizes such available PKA feature for establishing the pairing operation, for those devices which have successfully crossed the PI and DI stages.

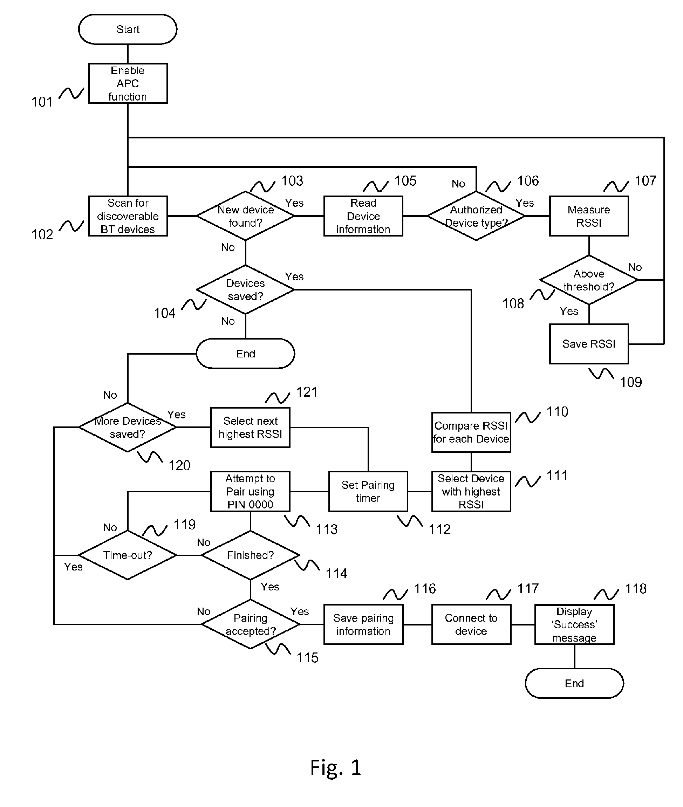

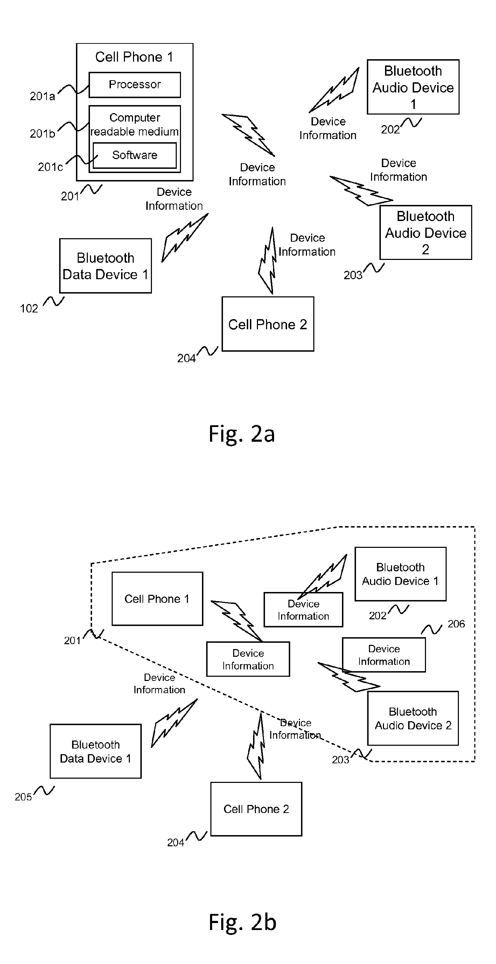

FIG. 1 is a flow diagram of one embodiment of a method of automatic pairing and connection operations between a host device and a wireless device. In this embodiment, the application utilizes a Bluetooth protocol, a cell phone serves as the host device, and an A2DP/AVRCP audio speaker system serves as the wireless device. Referring to the flow diagram at FIG. 1 and the block diagrams at FIGs. 2a - 2d for more details, the APC function may be automatically enabled when the Bluetooth function is enabled 101 on a cell phone 201. In other implementations, the APC function may be implemented by clicking on an icon, or by other methods by which the user is given a means for enabling and disabling the feature.

FIG. 2a is a block diagram illustrating the wireless devices and the host device used in the flow diagram of FIG. 1. As illustrated in Fig. 2a, once enabled 101 (as shown in Fig. 1), the APC function of a host cell phone **201** initiates a scan **102** for other Bluetooth devices **202** - **205** that may be broadcasting DI. The host cell phone 201 of Fig. 2a includes a processor **201a** and a computer readable medium **201b** (e.g., memory chip or device). The computer readable medium **201b** includes the software program **201c** that executes the process steps described herein. The other electronic devices include similar processing and memory elements, or equivalents thereof, for performing the steps described herein.

The host cell phone **201** scans for the broadcasting devices **103**, to determine if there are any candidates available for the APC function. If no broadcasts are detected, the APC function checks to see if any devices have already been saved to a memory **104**. This saved information has been referred to as a 'second set' in this text. If no devices are saved to the memory in the second set, the APC operation is terminated. In some embodiments, the scan may continue as long as the APC operation is enabled. Other embodiments may include, without being limited to, the use of a timer to disable the scanning after a specified period of time, and/or to schedule periodic scan cycles. If the host cell phone **201** detects a broadcast **103** then the APC function may read **105** the DI **206** that is contained in the received broadcast.

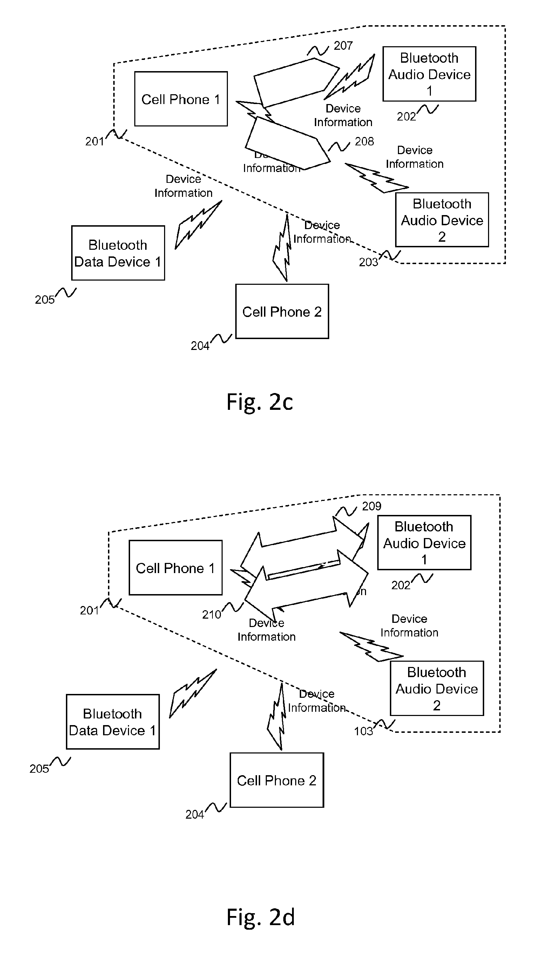

FIG. 2b is a block diagram illustrating the broadcast of device information by the Bluetooth devices of FIG. 2a. Only audio devices are shown (with dashed lines) to be selected as per an authorized list of device types and for proceeding with the pairing operation. FIG. 2c is a block diagram illustrating the host device measuring the received signal strength indication (RSSI) factor for each of the broadcasting devices that are selected as in FIG. 2b. FIG. 2d is a block diagram illustrating the host device initiating pairing to connect with the device that has the highest RSSI.

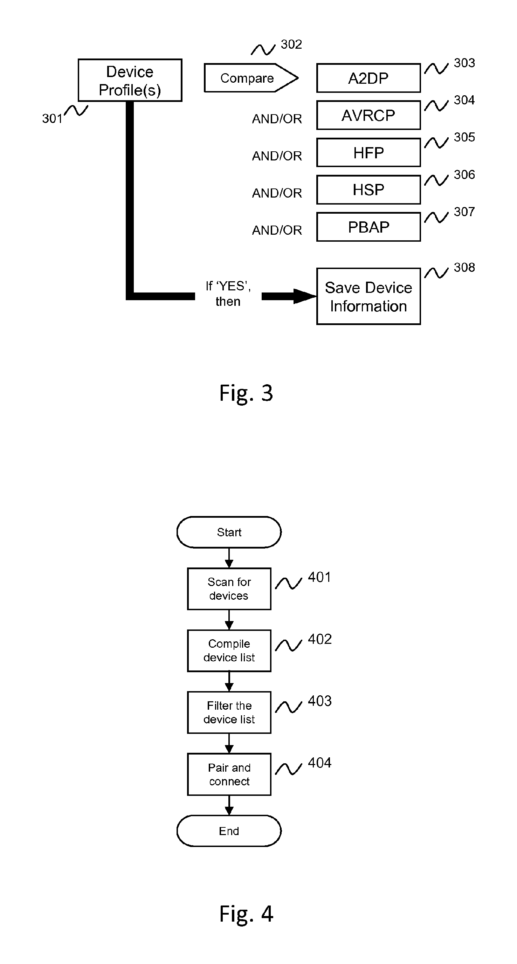

Now, referring to the block diagram at FIG. 3, the APC function will compare 302 the Device Profile(s) 301 to the authorized Bluetooth profiles 303 - 307 contained in the APC function software in order to determine 106 if the device is an authorized device. The authorized Bluetooth profiles may include without being limited to, A2DP 303, AVRCP 304, HFP 305, HSP 306, and/or PBAP 307. If the Device Profile(s) 301 are not authorized, then the APC function will scan for the next device 102. If the Device Profile(s) 301 exclusively match one or more of the authorized profiles **303** - **307,** then the DI **105** is temporarily saved **307.**

Referring to FIG. 1, according to an alternative embodiment, after the APC function is enabled **101,** the software determines if automatic gain control is available for the host device. If the gain control is available, the software attenuates the receiver gain to restrict its reception range. After temporarily saving 308 the DI **105** as the second set, the APC function requests a measurement **107** of the RSSI within the Bluetooth radio. The associated reading **107** is compared 108 to a predefined threshold level. This predefined threshold **108** level limits the APC function to only those devices **202 - 205** that are within a given range **207, 208** of the host cell phone **201.** If the RSSI reading 107 is above the threshold **108,** then the RSSI measurement is saved 109 along with the DI **105** as the second set and the APC function scans 102 for another broadcasting Bluetooth device. If another device is found **103,** then the process of reading the DI **105** is repeated. If another device is not found **103,** then the APC function verifies that the DI has been saved **104** and initiates a comparison **110** to determine which qualified device will be subject to the pairing operation. The APC function will select **111** the qualified device that has the highest RSSI value. Once this device is selected **111,** the APC function may set a timer **112** that limits the amount of time for which the host device **201** will attempt to pair **209.** After setting the timer **112,** the APC initiates the pairing operation **113.** As part of the pairing operation 113, the ACP function automatically assigns one of the standard PIN (such as '0000') as a passkey to the qualified device. If the pairing is finished **114,** the APC function will verify that the pairing operation is accepted **115** by the qualified device. If the pairing operation is accepted **115** or established, then the APC function saves the pairing information **116** and connects **117, 210** to the qualified device. After connecting **117, 210** the APC generates a message **118** that informs the user that the APC function is successful in connecting. If the pairing operation is not finished **114,** then the APC function will check 119 the pairing timer to determine if the timer has expired. If the timer has not expired **119,** then the APC function will continue the pairing operation **113** with the qualified device. If the pairing timer has expired **119,** then the APC function will terminate pairing and check **120** if there are other qualified devices saved in the memory or the second set. If the pairing operation fails due to an incorrect PIN, the ACP function will re-try the pairing operation by sending an alternate PIN (such as 11234'.) This process will be repeated until pairing is successful or all standard PINs have been issued. If the pairing operation fails for a specific reason, such as a rejection by the qualified device, then the APC function will terminate pairing and check **120** if there are other qualified devices saved in the memory or the second set. If the pairing is finished **114** but the target device did not accept **115** the pairing request, then the APC function will also check **120** if there are other qualified devices saved in the memory or the second set. If there are more devices saved in memory **120,** then the APC function will select from the remaining qualified devices, that device which has the greatest RSSI value **121** and re-start the pairing operation by setting the pairing timer **112.** If there are no additional qualified devices stored in the memory **119,** then the APC function may initiate **102** a new scan for more Bluetooth devices.

Referring to the simplified top-level flow diagram at FIG. 4 for a consolidated APC function, after the APC function is enabled, the first step is to scan **401** the environment for devices that are broadcasting. As devices are detected, a list of available devices is compiled **402,** after which the list is filtered **403** in order to choose the most qualified device. Once the qualified device is selected, the APC function then attempts pairing and connection operations **404.**

The APC function may be automatically enabled when the Bluetooth function is enabled on a host device such as a cell phone. In other implementations, the APC function may be implemented by clicking on an icon, or by other methods in which the user is given a means for enabling and disabling the function.

The invention is applicable to any wireless communications protocol, including but not limited to Bluetooth, ZigBee, and WiFi. For the invention, the term 'pairing' refers to going through the several steps of PI, DI and PKA, as illustrated in FIG. 1, and does not associate with the 'pairing' term typically used for Bluetooth devices and less commonly used with other wireless protocols.

For most wireless protocols, there is an initial activity in which two devices are 'paired' by exchanging a key or PIN code; and there is a recurring activity in which devices can connect to each other, given that the initial pairing was successful. However, the APC function will only auto connect after a successful pairing and once a paired device is disconnected, the APC function does not automatically connect to that device again.

One use of the present invention is in a cellular telephone that includes an integrated Bluetooth radio. It is common for such cell phones to be paired to a variety of Bluetooth peripherals such as hands-free headsets, hands-free car kits, Bluetooth speaker systems, Bluetooth stereo adapters, etc. The APC software is installed on the cell phone and an associated icon is displayed on the cell phone's main display page. The user can enable the APC function simply by clicking on the icon. When the icon is clicked, its image is changed to indicate that the cell phone is in APC mode. The user simply clicks the icon in order to toggle in or out of the APC mode. In order to pair to a new wireless device, the user simply turns on the new wireless device and brings it into proximity with the cell phone. The 'proximity' factor may be determined by a maximum range such as less than two feet, less than one meter, etc. Provided that the wireless device automatically enters the pairing mode when turned-on, no other user interaction is required. However if the new wireless device requires a particular sequence of key-strokes, then the user will be required to perform those key-strokes in order to set the new wireless device for the pairing operation. When the pairing operation is complete, the cell phone displays a message indicating that it is connected to the new wireless device. As an option, the cell phone may display a message that indicates successful pairing operation and request that the user presses a key in order to connect to the new wireless device.

As used in this application, the words "a," "an," and "one" are defined to include one or more of the referenced item unless specifically stated otherwise. Also, the terms "have," "include," "contain," and similar terms are defined to mean "comprising" unless specifically stated otherwise. Furthermore, the terminology used in the specification provided above is hereby defined to include similar and/or equivalent terms, and/or alternative embodiments that would be considered obvious to one skilled in the art given the teachings of the present patent application.

## Claims

1. A method of pairing and connection of one or more wireless device(s) for wireless communication with a wireless host device, the method employing a software for a pairing operation and a connection operation, the method comprising the steps of:
scanning by the host device automatically, for the pairing operation, the scanning being for detecting broadcast signal(s) that are being radiated by the one or more wireless device(s), the broadcast signal(s) including information on device type(s) for the one or more wireless device(s);
forming a first set with the information on device type(s), automatically for the pairing operation, the first set accepting only the device type(s) from a preauthorized list;
measuring signal strength(s) for the broadcast signal(s) from the first set automatically, for the pairing operation;
saving a second set automatically for the pairing operation, the second set being the first set with the signal strength(s), the second set accepting the one or more wireless device(s) only if having the signal strength(s) higher than a predefined threshold level, the signal strength(s) increasing with enhancing physical proximity of the one or more wireless device(s) with the host device;
identifying a qualified device automatically from the second set, for the pairing operation, the qualified device having a highest signal strength when a plurality of the signal strengths are available in the second set;
assigning a passkey to the qualified device with a pairing request for the pairing operation automatically, the passkey forming a security code for the pairing operation;
establishing the pairing operation automatically if the pairing request is accepted by the qualified device;
establishing the connection operation automatically between the qualified device and the host device, after the pairing operation is established for the qualified device;
continuing the pairing operation and the connection operation automatically, by identifying a next qualified device from the second set, until there is no saved information in the second set; and
continuing the pairing operation and the connection operation automatically, starting from the scanning, until there is no broadcast signal detected.

2. The method of claim 1, further comprising the step of:
enabling a pairing and connection mode in the host device by a user before the scanning, for initiating the pairing operation and the connection operation, the user having the option to disable the mode any time.

3. The method of claim 2, further comprising the steps of:
maintaining the pairing and connection mode active for a limited time; and
shutting off the mode automatically, if there is no broadcast signal detected while the scanning and no saved information in the second set.

4. The method of claim 1, further comprising the step of:
saving the first set automatically, for the pairing operation.

5. The method of claim 1, further comprising the step of:
saving a third set automatically, for the pairing operation, the third set comprising information on the established pairing operation.

6. The method of claim 1, further comprising the step of:
requiring to re-establish the connection operation starting from the scanning, when a connection from the one or more wireless device(s) is broken.

7. The method of claim 1, further comprising the step of:
reducing a signal sensitivity factor of a radio receiver for the host device, such that the allowable distance between the host device and the one or more wireless device(s) can be intentionally reduced, for providing a physical proximity pre-filter of the one or more wireless device(s) qualifying for the pairing operation.

8. The method of claim 7, wherein the signal sensitivity factor is reduced algorithmically through the software, to enable a firmware actuation of a digital gain control feature present within the radio receiver.

9. The method of claim 7, wherein the signal sensitivity factor is reduced algorithmically through the software, to control an attenuation circuitry external to the radio receiver.

10. The method of claim 1, wherein the signal strength(s) is (are) measured by a circuitry disposed within the host device.

11. The method of claim 1, wherein the signal strength(s) is (are) measured by a circuitry disposed outside the host device.

12. The method of claim 1, wherein the preauthorized list includes the device type with at least one of the following profiles - advanced audio distribution profile (A2DP), audio video remote control profile (AVRCP), hands free profile (HFP), head-set profile (HSP) and phone book access profile (PBAP).

13. The method of claim 1, further comprising the step of:
disabling the scanning automatically, after a first predetermined time period.

14. The method of claim 1, further comprising the step of:
scheduling the scanning automatically, for periodic cycles.

15. The method of claim 1, further comprising the steps of:
continuing the pairing request with the passkey assignment automatically, until the pairing request is accepted by the qualified device; and
disabling the pairing request automatically, after a second predetermined time period.

16. The method of claim 1, further comprising the step of:
generating a message in the host device automatically, for informing the user that the connection operation is established.

17. The method of claim 1, wherein the signal strength is a received signal strength indication (RSSI) factor, in the host device.
